# EUROPÄISCHE PATENTSCHRIFT

(11) **EP 3 382 835 B1**
(45) Veröffentlichungstag und Bekanntmachung des Hinweises auf die Patenterteilung: **04.11.2020**
(21) Anmeldenummer: 18160985.0
(22) Anmeldetag: 09.03.2018
(51) Int. Cl.: H02G 3/14, H01R 13/66, H02J 7/00, H04M 1/04, H01R 24/68, H04M 19/08

(54) **ELEKTRISCHES UNTERPUTZ-INSTALLATIONSGERÄT MIT LADEFUNKTION FÜR EIN MOBILES AUDIO- UND KOMMUNIKATIONSGERÄT**
ELECTRICAL BUILT-IN INSTALLATION DEVICE WITH CHARGER FOR A MOBILE AUDIO AND COMMUNICATION DEVICE
APPAREIL D'INSTALLATION ENCASTRÉ ÉLECTRIQUE DOTÉ D'UNE FONCTION DE CHARGE POUR UN APPAREIL DE COMMUNICATION AUDIO MOBILE

(30) Priorität: 29.03.2017 DE 202017101832 U
(43) Veröffentlichungstag der Anmeldung: 03.10.2018
(73) Patentinhaber: ABB Schweiz AG, 5400 Baden (CH)
(72) Erfinder: Mrkajic, Oliver, 58507 Lüdenscheid (DE); Ewers, Manfred, 58239 Schwerte (DE); Schrage, Ortwin, 47906 Kempen (DE); Kohaupt, Stephan, 58093 Hagen (DE); Shum, Wai Yin, Tung Chung, Hong Kong (CN); Feng, Guang Quan, LongGang District, ShenZhen, Guangdong 518100 (CN); Wong, Jackson, San Francisco, CA California 94127 (US); Sum, Tsai Wing, Hong Kong, Hong Kong (CN)
(74) Vertreter: Marks, Frank

(56) Entgegenhaltungen:
- WO-A1-2016/172542
- DE-A1-102009 017 265
- DE-A1-102010 005 393
- DE-U1- 20 306 293
- US-A1- 2005 109 528
- US-A1- 2015 089 675

## Beschreibung

Die Erfindung betrifft ein elektrisches Unterputz-Installationsgerät mit Ladefunktion für mobile Audio- und Kommunikationsgeräte gemäß Anspruch 1.

Schalterprogramme bzw. Programme von Installationsgeräten werden oftmals mit Ladefunktionen für mobile Geräte ergänzt. Hier sind zahlreiche marktübliche Anwendungen bekannt, die das Laden der mobilen Geräte im Design des Schalter- und Steckdosenprogramms ermöglichen und so die Belegung einer Steckdose mit einem zusätzlichen Netzteil zum Laden des mobilen Gerätes vermeiden.

Beispielsweise beschreibt die DE 10 2010 005 393 A1 ein Unterputz- Installationsgerät, welches ein Ladegerät für ein mobiles Audiogerät sowie einen elektrischen 230V-Anschluss bis 250V in dem Unterputz-Einsatz aufweist. Das Unterputz-Installationsgerät ist weiterhin mit einem Halter, mit einer Zentralscheibe für die Aufnahme des mobilen Audiogerätes sowie einem Abdeckrahmen und einer Leiterplatte, welche mittels mehrerer Steckvorrichtungen die elektrische Verbindung zwischen dem mobilen Audiogerät und dem Unterputz-Einsatz sicherstellt, ausgestattet. Die DE 10 2009 017 265 A1 beschreibt ein Unterputz- Installationsgerät mit den Merkmalen des Anspruchs 1. Die US 20050109528 A1 beschreibt ein weiteres Unterputz- Installationsgerät mit Ladegerät.

Bei elektrischen Unterputz-Installationsgeräten eines Schalter- und Steckdosenprogrammes zur Aufnahme und zum Laden der mobilen Audio- und Kommunikationsgerätes besteht prinzipiell das Problem, dass ein Herausfallen der Geräte aus der Aufnahme bzw. Ladeschale nicht auszuschließen ist.

Um dies zu vermeiden und die mobilen Audio- und Kommunikationsgeräte vor Beschädigungen zu schützen, sind die Ladeschalen bzw. Aufnahmen für das mobile Gerät oft so konstruiert, dass die mobilen Geräte bei ihrem Einlegen in die Schale eine leichte Rücklagen einnehmen und so im Fall eines in der Wand installierten Installationsgerätes während dem Ladevorgang der Wand zugeneigt sind.

Dies hat den Nachteil, dass die teilweise sehr hochwertigen Oberflächen der mobilen Geräte mit der Oberfläche der Wand in Berührung kommen und je nach Beschaffenheit der Wandoberfläche die Oberfläche des mobilen Gerätes oder die rückseitig angeordnete Kamera verkratzt oder beschädigt werden. Hat beispielsweise die Wandoberfläche eine sehr harte und raue Struktur, wie bei einem Quarz- oder Mineralputz, kann die anliegende Hochglanzoberfläche oder die anliegende Linse einer rückseitig angeordneten Kamera des mobilen Kommunikationsgerätes Schaden nehmen.

Die verwendeten Ladeschalen sind oftmals nicht geeignet mobile Geräte größerer Abmessungen, wie beispielsweise iPads/Tablet-PC's, sicher aufzunehmen und zu halten, so dass deren Hersteller ein Laden dieser Geräte mittels der vorab beschriebenen Unterputz- Installationsgeräte mit integriertem Ladegerät nicht zulassen.

Weiterhin sind bei einigen mobilen Audio- und Kommunikationsgeräten, wie beispielsweise iPhones oder iPod's die Anschlüsse zum Laden der Geräte in besonderer Weise ausgestaltet. Diese sogenannten Lightning- Anschlüsse, welche eine dünnere Bauweise als die üblicherweise verwendeten Mikro- USB-Anschlüsse aufweisen, können während des Aufladens des mobilen Gerätes das mobile Gerät oftmals nicht stabil in der Ladeschale des Installationsgerätes halten.

Der Erfindung liegt die Aufgabe zugrunde, den Aufbau des Installationsgerätes so zu optimieren, dass vorab genannte Nachteile vermieden werden und nur geeignete Geräte in der Ladeschale ablegbar sind.

Diese Aufgabe wird erfindungsgemäß gelöst durch ein Installationsgerät gemäss Anspruch 1 zur Aufnahme eines mobilen Audio- und Kommunikationsgeräte mit einem ein Ladegerät und einen elektrischen Anschluss bis 250V beinhaltenden Unterputz-Einsatz, mit einem Abdeckrahmen, mit einer Ladevorrichtung bzw. Ladeschale inklusive einer Steckvorrichtung für die Verbindung mit dem mobilen Audio- und Kommunikationsgerät zum Laden des Gerätes, mit einer auf die Ladeschale aufbringbaren Zentralabdeckung bzw. Zentralscheibe mit Halterung für das mobile Audio- und Kommunikationsgerät.

Bevorzugt ist die Steckvorrichtung an der Ladeschale als sogenannter Lightning Connector, USB-Type C- oder Mikro-USB- Anschluss ausgeführt.

Erfindungsgemäß ist die Ladeschale mit einem Halte- oder Sperrelement ausgestattet, welches als Zusatzteil mit der Ladeschale verbindbar bzw. auf diese aufsteckbar ist, um nur geeignete mobile Geräte, wie beispielsweise iPhones oder iPods bzw. Geräte mit einer Lightning Schnittstelle, auf der Ladeschale abzulegen und auch ein Herausfallen der mobilen Geräte beim Laden zu verhindern.

Das Sperrelement ist hinsichtlich seiner geometrischen Abmessungen weiterhin so ausgeführt, dass keine Geräte größerer Abmessungen, wie beispielsweise iPads/Tablet-PC's, in der Ladeschale abgelegt werden können.

Nach einer werkzeuglosen kompletten Montage der Ladestation ist das Halte- oder Sperrelement in einfacher Weise von an einer dafür vorgesehenen an der Ladeschale angeordneten Aufnahme eingesteckt und vorzugsweise mittels dafür am Halte-oder Sperrelement vorgesehener Rastmittel verrastet. Dazu ist die Rückseite des Sperrelements mit Erhebungen versehen, welche ein Verrasten der Ladeschale ermöglichen.

Die Rastmittel am Halte- oder Sperrelement sind in bevorzugter Weise als Führungsstege ausgeführt, welche an dem in die Ladeschale einzuführenden Ende des Halte-oder Sperrelements angeordnet sind und vorzugsweise einen quadratischen, rechteckigen, ovalen oder kreisrunden Querschnitt aufweisen.

In der Abdeckung bzw. Zentralscheibe des Installationsgerätes ist eine elastische federnde Anlagevorrichtung integriert bzw. angeformt, welche, wie das Halte- oder Sperrelement, vorzugsweise aus dem auch für die Zentralscheibe verwendeten Kunststoff gebildet ist. Jedoch kann das Halte- oder Sperrelement aus jedem beliebigen Kunststoff gebildet sein.

Die an der Abdeckung bzw. Zentralscheibe des Installationsgerätes angeordnete Anlagevorrichtung und das Halte- oder Sperrelement können entsprechend des jeweils verwendeten Installationsgeräte-Unterputz-Programm bzw. Schalter- oder Schalterprogrammes in unterschiedlichen Designs , Farben, Materialien und Gestaltungsformen ausführbar sein.

Um eine unerwünschte Verformung der federnden elastischen Anlagefläche weiter als vorgesehen zu vermeiden, damit das mobile Gerät keinen Kontakt mit der Wandoberfläche bekommt, ist hinter der Anlagefläche ein Anschlag vorgesehen, an den die Anlagefläche anschlagen kann und der Federweg so in vorteilhafter Weise begrenzt wird.

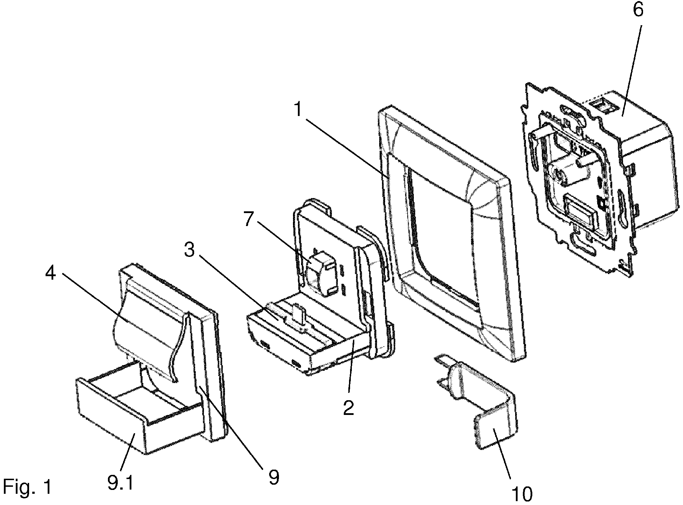

Weitere vorteilhafte und zweckmäßige Ausgestaltungen und Verbesserungen des erfindungsgemäßen elektrischen Installationsgerätes zur Aufnahme des mobilen Audio- und Kommunikationsgerätes sind in den Unteransprüchen und an Hand der in den Figuren 1 -4 dargestellten Ausführungsbeispiele erläutert.

Es zeigen:
- **Fig. 1**: eine Explosionsdarstellung eines beispielhaft ausgeführten erfindungsgemäßen elektrischen Unterputz-Installationsgerätes zur Aufnahme eines mobilen Audio- und Kommunikationsgerätes,
- **Fig. 2**: eine beispielhafte Ausführungsform des Halte- oder Sperrelements,
- **Fig. 3**: eine beispielhafte Ausführungsform des erfindungsgemäßen elektrischen Unterputz-Installationsgerätes mit einem eingestecktem mobilen Audiound Kommunikationsgerät und dem Halte- oder Sperrelement nach der kompletten Montage der Ladestation,
- **Fig. 4**: eine Seitenansicht eines weiteren beispielhaften elektrischen UnterputzInstallationsgerätes zur Aufnahme des mobilen Audio- und Kommunikationsgerätes gemäß vorliegender Erfindung, wobei sich das mobile Audiound Kommunikationsgerät im Aufnahmeschacht der Zentralabdeckung befindet.

**Fig. 1** zeigt das erfindungsgemäße elektrische Unterputz-Installationsgerät zur Aufnahme eines mobilen Audio- und Kommunikationsgerätes in einer Explosionsdarstellung mit einem Unterputzeinsatz 6, einem Halte- oder Sperrelement 10, einem Abdeckrahmen 1, einer Ladevorrichtung bzw. Ladeschale 2 und einer auf die Ladeschale 2 aufbringbaren Zentralabdeckung 9, auch Zentralscheibe genannt, mit einem Aufnahmeschacht 9.1, nachfolgend auch Halterung genannt, für ein mobiles Audio- und Kommunikationsgerät.

Das Halte- oder Sperrelement 10 ist mit der Ladeschale 2 verbindbar bzw. auf diese aufsteckbar, um nur ausgewählte mobile Geräte, wie iPods oder iPhone auf der Ladeschale 2 abzulegen und ein Laden, beispielsweise von iPads/Tablet- PCs, zu verhindern, da diese auf Grund ihrer größeren Abmessungen nicht sicher in der Ladeschale 2 gehalten werden können.

Die Ladeschale 2 weist einen Anschlag 7 und eine, vorzugsweise als Steckverbinder ausgeführte Steckvorrichtung 3 für die Verbindung mit dem mobilen Audio- und Kommunikationsgerät auf, um dieses aufzuladen, wobei die Steckvorrichtung 3 als Lightning Connector ausgeführt ist.

Die Zentralscheibe 9 ist in ihrer Ausführung so gestaltet, dass sie eine Designabdeckung für die Ladeschale 2 entsprechend dem jeweils verwendeten Schalter- oder Steckdosenprogramm bildet.

Um das zum Laden im Aufnahmeschacht der Zentralscheibe 9 abgelegte mobile Gerät vor Beschädigungen zu schützen, ist die Zentralscheibe 9 mit einer integrierten, federnde Anlagevorrichtung 4 ausgestattet, die in unterschiedlichen Designs und Gestaltungsformen ausführbar ist.

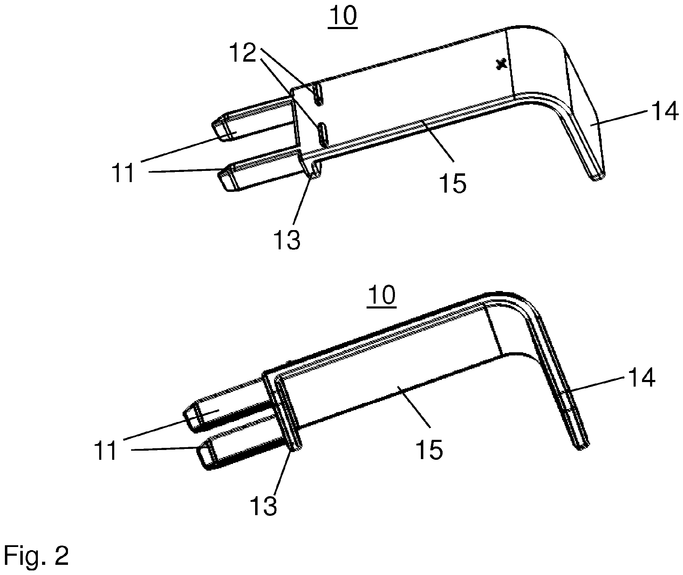

**Fig.** 2 zeigt eine beispielhafte Ausführungsform des Halte- oder Sperrelements 10 welches als Zusatzteil mit der Ladeschale 2 verbindbar bzw. auf diese aufsteckbar ist.

Das Halte- oder Sperrelement 10 ist in einer bevorzugten Ausführungsform ein L-förmiges Bauteil mit zwei unterschiedlich langen Schenkeln 13, 14 sowie einer Basis 15 und ist hinsichtlich seiner geometrischen Abmessungen weiterhin so ausgeführt, dass keine Geräte größerer Abmessungen, wie beispielsweise iPads, in der Ladeschale abgelegt werden können.

Die am ersten kurzen Schenkel 13 des Halte- oder Sperrelement 10 angeformten Rastmittel 11 sind als Führungsstege ausgeführt und an dem in die Ladeschale 2 einzuführenden Ende des Halte- oder Sperrelements 10 angeordnet.

Auf der Basis 15 des Sperrelements 10 sind, vorzugsweise Arretierungsmittel 12 angeordnet, welche ein Verrasten /in Position halten mit der Ladeschale 2 ermöglicht.

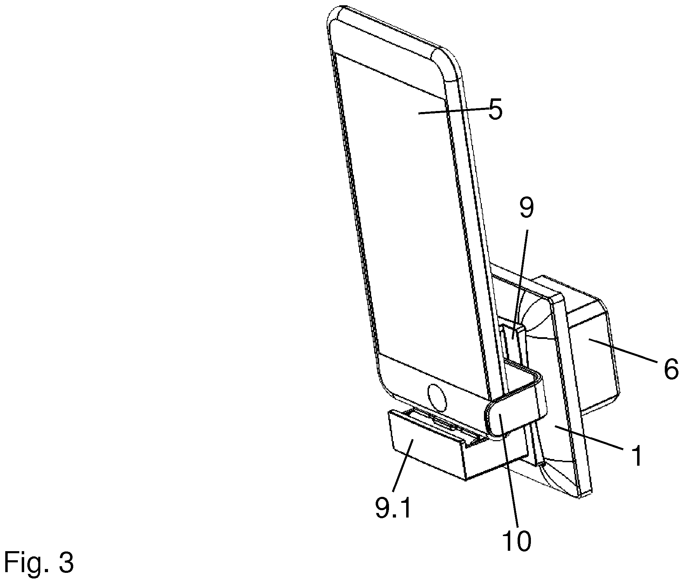

**Fig.** 3 zeigt eine beispielhafte Ausführungsform des erfindungsgemäßen elektrischen Unterputz-Installationsgerätes mit einem eingestecktem mobilen Audio- und Kommunikationsgerät 5, dem Unterputzeinsatz 6 mit der integrierten Ladeelektronik und dem Halte- oder Sperrelement 10 nach der kompletten Montage der Ladestation, wobei das Halte- oder Sperrelement 10 eingesteckt ist und mittels dafür vorgesehener Führungs-/ Rastmittel 11 mit der Ladeschale 2 verrastet ist.

Erfindungsgemäß ist das Halte- oder Sperrelement 10 entweder an der rechten Seite oder an der linken Seite auf die Ladeschale 2 aufsteckbar und mit dieser verrastbar.

Weiterhin sind die Zentralscheibe 9 mit dem Aufnahmeschacht 9.1 für das zu ladende mobile Audio- und Kommunikationsgerät 5 und der Abdeckrahmen 1 dargestellt, welcher die Zentralscheibe 9 umschließt.

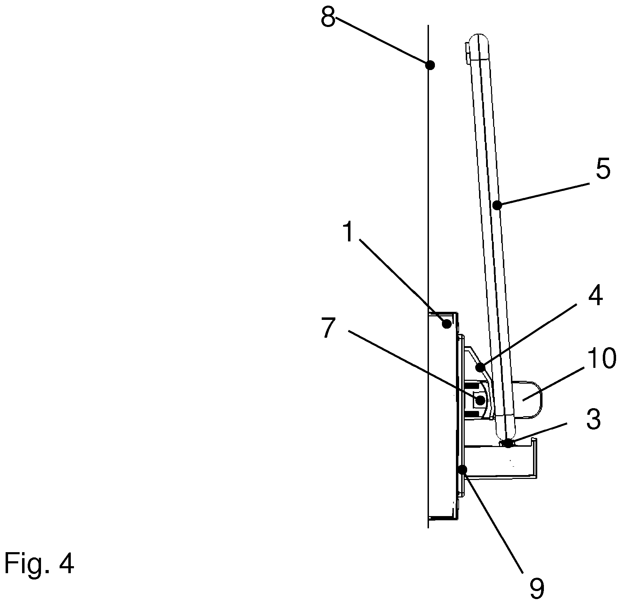

In der **Fig. 4** ist eine Seitenansicht durch das beispielhafte elektrische Unterputz-Installationsgerät zur Aufnahme des mobilen Audio- und Kommunikationsgerätes 5 gemäß der Erfindung dargestellt, bei welchem das mobile Audio- und Kommunikationsgerät 5 mit der Steckverbindung 3 der Ladeschale 2 verbunden ist. Die Seitenansicht durch das elektrische Unterputz-Installationsgerät zeigt die Zentralscheibe 9 inklusive der federnden Anlagevorrichtung 4, die beispielhaft als Lightning Connector ausgeführte Steckvorrichtung 3 der Ladeschale 2 und das Halte- und Sperrelement 10.

Das Unterputz-Installationsgerät ist auch hier durch den Abdeckrahmen 1 komplettiert.

Zur Verbesserung der Anlagefunktion des im Aufnahmeschacht der Zentralscheibe 9 abgelegten mobilen Gerätes befindet sich als zusätzlicher Puffer der Anschlag 7, an dem die Anlagefläche der Anlagevorrichtung 4 anschlagen kann. Der Anschlag 7 ist, vorzugsweise im mittleren Bereich der Frontplatte der Ladeschale 2, angeordnet, welcher verhindert, dass sich die Anlagefläche der elastischen Anlagevorrichtung 4 während der Ablage des mobilen Gerätes 5 weiter als vorgesehen verformt, den Federweg der Anlagevorrichtung 4 begrenzt und das mobile Gerät 5 Kontakt mit der Wandoberfläche 8 bekommt.

### Bezugszeichenliste

- 1: Abdeckrahmen
- 2: Ladeschale, Ladevorrichtung
- 3: Steckverbinder, Steckvorrichtung der Ladevorrichtung für die Verbindung mit dem mobilen Audio- und Kommunikationsgerät, angeordnet im Aufnahmeschacht
- 4: federnde Anlagevorrichtung
- 5: mobiles Audio- und Kommunikationsgerät
- 6: Unterputzeinsatz mit integrierter Ladefunktion
- 7: Anschlag auf der Ladeschale/ Ladevorrichtung, Aufnahme
- 8: Wandoberfläche
- 9: Zentralscheibe, Zentralabdeckung, Designabdeckung
- 9.1: Aufnahmeschacht, Halterung für ein mobiles Audio- und Kommunikationsgerät
- 10: Halte- oder Sperrelement
- 11: Führungsmittel, Rastmittel
- 12: Arretierungsmittel
- 13: erster Schenkel des Halte- oder Sperrelements
- 14: zweiter Schenkel des Halte- oder Sperrelements
- 15: Basis des Halte- oder Sperrelements

## Patentansprüche

1. Elektrisches Unterputz-Installationsgerät zur Aufnahme eines mobilen Audio- und Kommunikationsgerätes (5),
- mit einem ein Ladegerät und einen elektrischen Anschluss bis 250V beinhaltenden UP-Einsatz (6),
- mit einem Abdeckrahmen (1),
- mit einer Ladevorrichtung bzw. Ladeschale (2) inklusive einer Steckvorrichtung (3) für die Verbindung mit dem mobilen Audio- und Kommunikationsgerät zum Laden des Gerätes (5), und
- mit einer auf die Ladeschale (2) aufbringbaren Zentralabdeckung (9),
**dadurch gekennzeichnet, dass** die Zentralabdeckung (9) mit einer federnden elastischen Anlagevorrichtung (4) ausgestattet ist, an der das mobile Gerät (5) zur Anlage kommt, und dass die Ladeschale (2) mit einem Halte- oder Sperrelement (10) ausgestattet ist, welches als Zusatzteil mit der Ladeschale (2) verbindbar bzw. auf diese aufsteckbar ist, wobei das Halte-oder Sperrelement (10) angepasst ist, um nur geeignete mobile Geräte auf der Ladeschale (2) abzulegen und ein Herausfallen der mobilen Geräte beim Laden zu verhindern und dass das Halte- oder Sperrelement (10) in Bezug auf die Ausgestaltung seiner Oberflächenbeschaffenheit nicht von der Oberfläche der Zentralabdeckung (9) unterscheidbar ist.

2. Elektrisches Unterputz-Installationsgerät nach Anspruch 1, **dadurch gekennzeichnet, dass** die Steckvorrichtung (3) an der Ladeschale (2) als Lightning Connector, USB-Type C- oder Mikro-USB- Anschluss ausgeführt ist.

3. Elektrisches Unterputz-Installationsgerät nach Anspruch 1 oder 2, **dadurch gekennzeichnet, dass** das Halte- oder Sperrelement (10) hinsichtlich seiner geometrischen Abmessungen so ausgeführt ist, dass keine Geräte größerer Abmessungen, wie beispielsweise iPads/Tablet-PCs, in der Ladeschale (2) ablegbar sind.

4. Elektrisches Unterputz-Installationsgerät nach einem der vorstehenden Ansprüche, **dadurch gekennzeichnet, dass** das Halte- oder Sperrelement (10) nach der kompletten Montage der Ladevorrichtung, vorzugsweise werkzeuglos, an der Ladeschale (2) eingesteckt und mittels dafür am Halte- oder Sperrelement (10) befindlieher Führungs-/ Rastmittel (11) mit der Ladeschale (2) verrastet ist.

5. Elektrisches Unterputz-Installationsgerät nach Anspruch 4, **dadurch gekennzeichnet, dass** die Führungs-/Rastmittel am Halte- oder Sperrelement (10) als Führungsstege (11) ausgeführt sind, weiche an dem in die Ladeschale (2) einzuführenden Ende des Halte- oder Sperrelements (10) angeordnet sind.

6. Elektrisches Unterputz-Installationsgerät nach einem der vorstehenden Ansprüche, **dadurch gekennzeichnet, dass** auf der Rückseite des Halte- oder Sperrelements (10) Arretierungsmittel (12) angeordnet sind, welche ein Verrasten/in Position halten mit der Ladeschale (2) ermöglichen.

## Claims

1. Electrical flush-mounted installation device for receiving a mobile audio and communications device (5),
- comprising a flush-mounted insert (6) which contains a charging device and an electrical connection up to 250 V,
- comprising a covering frame (1),
- comprising a charging apparatus or charging tray (2) including a plug-in apparatus (3) for connection to the mobile audio and communications device for charging the device (5), and
- comprising a central cover (9) which can be fitted onto the charging tray (2),
**characterized in that** the central cover (9) is equipped with a spring-action elastic support apparatus (4) on which the mobile device (5) comes to rest, and **in that** the charging tray (2) is equipped with a holding or blocking element (10) which can be connected to the charging tray (2) or can be plug-mounted onto the said charging tray as an auxiliary part, wherein the holding or blocking element (10) is adapted in order to place only suitable mobile devices on the charging tray (2) and to prevent the mobile devices from falling out during charging, and **in that** the holding or blocking element (10) cannot be distinguished from the surface of the central cover (9) in respect of the configuration of its surface condition.

2. Electrical flush-mounted installation device according to Claim 1, **characterized in that** the plug-in apparatus (3) on the charging tray (2) is designed as a lightning connector, a USB type-C connection or a micro USB connection.

3. Electrical flush-mounted installation device according to Claim 1 or 2, **characterized in that** the holding or blocking element (10) is designed with respect to its geometric dimensions such that devices of larger dimensions, such as iPads/tablet PCs for example, cannot be placed in the charging tray (2).

4. Electrical flush-mounted installation device according to one of the preceding claims, **characterized in that** the holding or blocking element (10) is plugged in after complete mounting of the charging apparatus, preferably without tools, on the charging tray (2) and is latched to the charging tray (2) by means of guide/latching means (11) which are located on the holding or blocking element (10) for this purpose.

5. Electrical flush-mounted installation device according to Claim 4, **characterized in that** the guide/latching means on the holding or blocking element (10) are designed as guide webs (11) which are arranged at that end of the holding or blocking element (10) which is to be inserted into the charging tray (2).

6. Electrical flush-mounted installation device according to one of the preceding claims, **characterized in that** locking means (12) are arranged on the rear side of the holding or blocking element (10), which locking means allow the said holding or locking element to be latched/held in position with the charging tray (2).

## Revendications

1. Appareil d'installation électrique encastré permettant de recevoir un appareil audio et de communication mobile (5), comprenant
- un insert encastré (6) comportant un chargeur et une connexion électrique jusqu'à 250 V,
- un cache (1),
- un dispositif de chargement ou un socle de chargement (2) comprenant un dispositif de connexion (3) pour la connexion avec l'appareil audio et de communication mobile pour charger l'appareil (5), et
- un recouvrement central (9) pouvant être appliqué au socle de chargement (2),
**caractérisé en ce que** le recouvrement central (9) est équipé d'un dispositif d'appui élastique à ressort (4) sur lequel est calé l'appareil mobile (5), et **en ce que** le socle de chargement (2) est équipé d'un élément de maintien ou de verrouillage (10) qui peut être relié au, ou enfiché sur le socle de chargement (2) comme un accessoire, dans lequel l'élément de maintien ou de verrouillage (10) est adapté pour la dépose uniquement d'appareils mobiles adéquats sur le socle de chargement (2) et pour empêcher les appareils mobiles de tomber lors du chargement, et **en ce que** l'élément de maintien ou de verrouillage (10) se confond avec la surface ou le recouvrement central (9) en ce qui concerne la configuration de la nature de sa surface.

2. Appareil d'installation électrique encastré selon la revendication 1, **caractérisé en ce que** le dispositif de connexion (3) est réalisé au niveau du socle de chargement (2) sous la forme d'un connecteur Lightning, d'un port USB type C ou d'un port micro USB.

3. Appareil d'installation électrique encastré selon la revendication 1 ou 2, **caractérisé en ce qu'**au niveau de ses dimensions géométriques, l'élément de maintien ou de verrouillage (10) est réalisé de telle sorte qu'il n'est pas possible de déposer des appareils de dimensions supérieures, comme par exemple des iPads/ des tablettes, sur le socle de chargement (2).

4. Appareil d'installation électrique encastré selon l'une quelconque des revendications précédentes, **caractérisé en ce que** l'élément de maintien ou de verrouillage (10), après l'assemblage complet du dispositif de chargement, de préférence sans outil, est inséré sur le socle de chargement (2) et est enclenché dans le socle de chargement (2) à l'aide de moyens de guidage/d'enclenchement (11) qui se trouvent sur l'élément de maintien ou de verrouillage (10) à cet effet.

5. Appareil d'installation électrique encastré selon la revendication 4, **caractérisé en ce que** les moyens de guidage/d'enclenchement sont réalisés sur l'élément de maintien ou de verrouillage (10) comme des languettes de guidage (11) qui sont disposées à l'extrémité à introduire dans le socle de chargement (2) de l'élément de maintien ou de verrouillage (10).

6. Appareil d'installation électrique encastré selon l'une quelconque des revendications précédentes, **caractérisé en ce qu'**à l'arrière de l'élément de maintien ou de verrouillage (10) sont disposés des moyens de blocage (12) qui permettent un enclenchement/maintien en position avec le socle de chargement (2).
